# EUROPEAN PATENT SPECIFICATION

(11) **EP 1 157 610 B1**
(45) Date of publication and mention of the grant of the patent: **12.01.2005**
(21) Application number: 01105930.0
(22) Date of filing: 09.03.2001
(51) Int. Cl.: A01M 29/02

(54) **Ultrasonic animal reppeller**
Ultraschallgerät zum Vertreiben von Tieren
Appareil ultrasonique pour repousser les animaux

(30) Priority: 22.05.2000 JP 2000150200
(43) Date of publication of application: 28.11.2001
(73) Proprietor: Matsushita Electric Works, Ltd., Kadoma-shi, Osaka (JP)
(72) Inventor: Kawaguchi, Masahiro, Kadoma-shi, Osaka (JP); Akiyama, Shouichi, Kadoma-shi, Osaka (JP); Hiramatsu, Takaaki, Kadoma-shi, Osaka (JP)
(74) Representative: Dallmeyer, Georg, Dipl.-Ing.

(56) References cited:
- FR-A- 2 782 241
- US-A- 3 873 960
- US-A- 5 463 595
- US-A- 5 602 523

## Description

The present invention generally relates to a multidirectional ultrasonic transmitter and, more particularly, to an ultrasonic animal repeller for transmitting ultrasonic waves in a plurality of directions for repelling or dispelling one or more relatively small animals entering areas of coverage surveyed by the ultrasonic waves.

For the purpose of the invention herein disclosed, the term "small animals" herein used is intended to encompass cats, dogs, birds, weasels, raccoons, deer or like animals that are, regardless of whether domestic or wild, considered offensive, harmful or objectionable in any way whatsoever when they approach or enter restricted areas or estates.

An ultrasonic animal repeller including a detecting means and an ultrasonic wave generating means has been developed and used in practice for the purpose of keeping one or more small animals off from, for example, a property or playground sandpit. In general, the known ultrasonic animal repeller is so designed that when a sensor forming a part of the detecting means detects entry of a small animal into a surveyed area, ultrasonic waves are outputted to prevent the small animal from approaching nearby to thereby avoid excreta-based displeasure. Since the ultrasonic waves are imperceptible to the human ears, there is no possibility that people will feel discomfort.

However, the prior art ultrasonic animal repeller has an ultrasonic output coverage that is defined merely forwardly thereof. Since this ultrasonic output coverage is relatively narrow as compared with a surveillance area covered by the sensor, when the sensor detecting the presence of a small animal and outputs the ultrasonic waves, the ultrasonic waves will not reach the small animal, failing to exhibit a sufficient anti-animal effect, i.e., an effect of keeping animals a distance away.

US-A-5602523 discloses a multiple stationary system composed of a plurality of units outputting respective ultrasonic waves in different directions, wherein each unit has only one audio driver for outputting ultrasonic waves. The same applies to US-A-5463595.

US-A-3873960 discloses a vermin chasing and control ultrasonic wave generating system having a plurality of speakers K connected in series for outputting respective ultrasonic waves.

US-A- 3873960 fails to teach or suggest mounting all the speakers K on the system body to output ultrasonic waves in directions that are different from each other.

The present invention has been developed in view of the foregoing and is intended to expand the ultrasonic output coverage to thereby enhance the anti-animal effect.

In order to accomplish the foregoing object, the present invention provides an ultrasonic animal repeller according to claim 1, which includes a plurality of ultrasonic output units so oriented as to generate ultrasonic waves in different directions relative to each other. As such, as compared with the prior art ultrasonic animal repeller, the ultrasonic output coverage can be enlarged to enhance the effect of keeping animals such as cats a distance away.

If desired, the direction of propagation of the ultrasonic wave generated from each of the ultrasonic output units may be variable, so that the ultrasonic output coverage suited to the place of installation of the ultrasonic animal repeller can be provided. Preferably, each of the ultrasonic output units has a respective detector such that when any one of the detectors detects the presence of a small animal, the ultrasonic waves can be generated from one of the ultrasonic output units that is associated with one of the detectors detecting the presence of the small animal. In this case, the ultrasonic output units except for the ultrasonic output unit associated with the detector then detecting the small animal will not be activated, thereby resulting in an advantageous saving of an electric power.

In a preferred embodiment, a single detector has a plurality of ultrasonic output units. In another preferred embodiment, the ultrasonic output units may generate respective ultrasonic waves at different timings.

### BRIEF DESCRIPTION OF THE DRAWINGS

The present invention will become readily understood from the following description of preferred embodiments thereof made with reference to the accompanying drawings, in which like parts are designated by like reference numeral and in which:
Fig. 1 is a schematic top plan view of an ultrasonic animal repeller according to one preferred embodiment of the present invention, showing the ultrasonic animal repeller having three ultrasonic output coverages;
Fig. 2 is a block diagram showing an electric circuit employed in the ultrasonic animal repeller;
Figs. 3A and 3B are schematic top plan views, showing modifications of the ultrasonic animal repeller having two ultrasonic output coverages, respectively;
Fig. 4 is a schematic perspective view of the ultrasonic animal repeller embodying the present invention;
Fig. 5 is a schematic top plan view, showing a further modification of the ultrasonic animal repeller having four ultrasonic output coverages;
Fig. 6 is a block diagram showing a modified electric circuit employed in the ultrasonic animal repeller embodying the present invention;
Figs. 7A and 7B are schematic front elevational and top plan views of a modification of the ultrasonic animal repeller according to the present invention;
Fig. 8 is a schematic top plan view of the ultrasonic animal repellent, showing a different example of ultrasonic output coverages according to the present invention;
Fig. 9 is a block diagram showing a modified circuit employed in the ultrasonic animal repellent; and
Fig. 10 is a chart showing timings at which ultrasonic waves are generated with the ultrasonic animal repeller according to the present invention.

### DESCRIPTION OF THE EMBODIMENTS

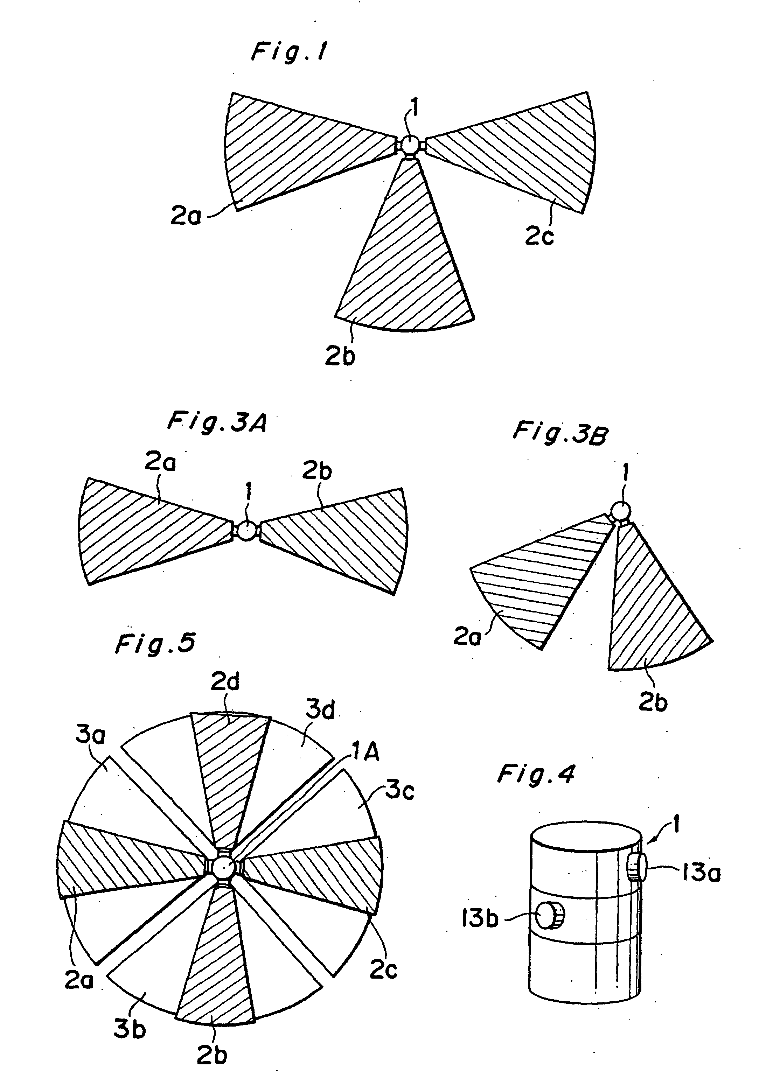

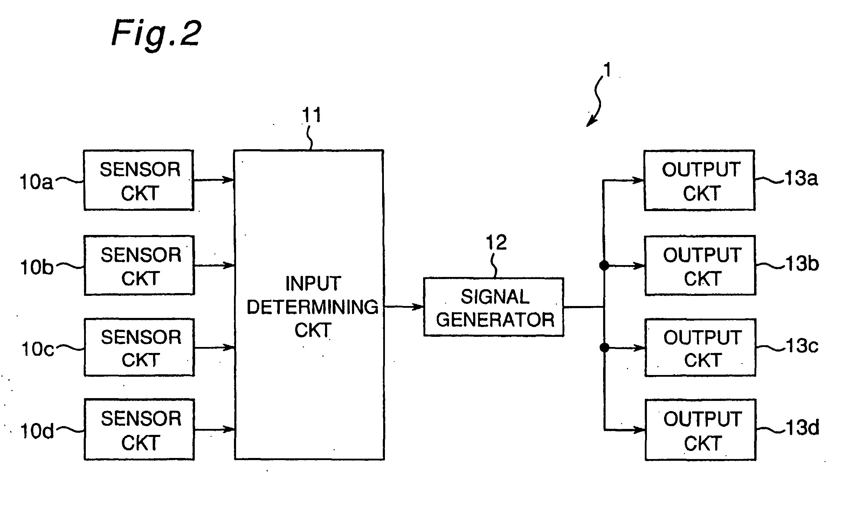

Referring now the accompanying drawings, Fig. 1 illustrates an example of ultrasonic output coverages exhibited by an ultrasonic animal repeller 1, and Fig. 2 illustrates a circuit block diagram of the ultrasonic animal repeller 1. As shown in Fig. 1, the ultrasonic animal repeller 1 includes a plurality of ultrasonic output units having respective directions of propagation of ultrasonic waves that are different from each other. Reference numerals 2a to 2c shown therein represent a respective ultrasonic output coverage. In the illustrated embodiment, three ultrasonic output coverages 2a to 2c are shown, but the number thereof may not be limited to three such as shown.

As shown in Fig. 2, the ultrasonic animal repeller 1 includes a sensor circuit 10 and a plurality of ultrasonic output circuits 13a to 13d. The number of the ultrasonic output circuits 13a to 13d is four and, therefore, the sensor circuit 10 includes four sensors 10a to 10d. It is, however, to be noted that the number of the ultrasonic output units 13a to 13d may not be necessarily equal to that of the sensors 10a to 10d.

Each of the sensors 10a to 10d is operable to detect a small animal or heat entering in or present in a predetermined area (sensor surveillance area). An input determining circuit 11 utilizes an input voltage or an input timing from any one of the sensors 10a to 10d in determining whether the small animal has been detected or whether an erroneous operation resulting from noises has occurred. A signal generator 12 is operable to generate a signal necessary to output an ultrasonic wave. By way of example, the signal generator 12 may generate a signal having a repetition of an ON state for 1.5 second and an OFF state for 1.5 second for 10 seconds at a frequency of 25 kHz. Each of the ultrasonic output circuits 13a to 13d is operable in response to the signal from the signal generator to output the ultrasonic wave.

The direction in which the ultrasonic wave generated from each of the ultrasonic output units 13a to 13d propagates is variable. Figs. 3A and 3B illustrate an example, in which the direction of the ultrasonic wave outputted is varied. In these figures, reference numerals 2a and 2b represent a respective ultrasonic output coverage. Thus, if the direction of each of the ultrasonic output coverages 2a and 2b is varied, the ultrasonic output coverages 2a and 2b appropriate to particular localities in which the ultrasonic animal repeller 1 is installed can be defined, thereby enhancing the anti-animal effect.

The ultrasonic animal repeller according to another embodiment will now be described. Fig. 5 illustrates a schematic diagram showing ultrasonic output coverages and sensor surveillance areas exhibited by the ultrasonic animal repeller 1A, Fig. 2 is the block diagram showing the internal circuit employed in the ultrasonic animal repeller 1A.

The ultrasonic animal repeller 1A includes a plurality of detectors corresponding respectively to a plurality of ultrasonic output circuits and is so operable that when one of the detectors detects a small animal, only one of the ultrasonic output circuits that is associated with such one of the detectors can output the ultrasonic wave. In Fig. 5, the ultrasonic animal repeller 1A is shown having four ultrasonic output circuits and four detectors, and the ultrasonic output coverages 2a, 2b, 2c and 2d correspond to and encompassed within the sensor surveillance areas 3a, 3b, 3c and 3d, respectively. Thus, the ultrasonic animal repeller 1A differs from the ultrasonic animal repeller 1 in that the ultrasonic animal repeller 1A is so operable that when any one of the sensors 10a to 10d detects a small animal, only one of the ultrasonic output circuits 13a to 13d that is associated with the sensor detecting the small animal can output the ultrasonic wave.

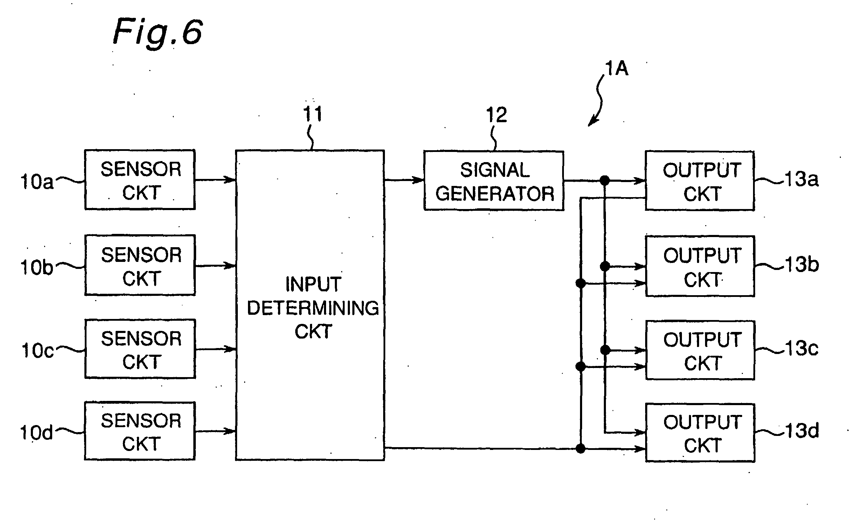

Accordingly, the input determining circuit 11 shown in Fig. 6 is so designed and so operable as to determine whether the small animal has been detected or whether an erroneous operation resulting from noises has occurred, in dependence in an input voltage or an input timing from the sensors 10a to 10d and also as to determine from which one of the sensors 10a to 10d an input is provided to the input determining circuit 11, so that the input determining circuit 11 can determine one of the ultrasonic output circuits 13a to 13d that should output the ultrasonic wave.

This feature makes it possible to save an electric power to be consumed, since when the sensor 10a, for example, detects the small animal the ultrasonic output circuits 13b to 13d except for the ultrasonic output circuit 13a associated with the sensor 10a are not activated.

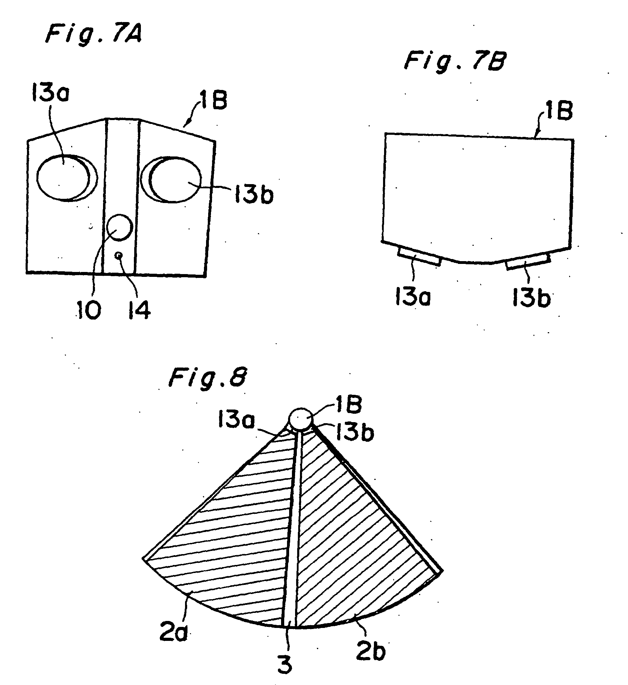

The ultrasonic animal repeller according to a further embodiment will now be described. As shown in Figs. 7A and 7B, the ultrasonic animal repeller 1 B includes a plurality of ultrasonic output devices (ultrasonic output circuits 13a and 13b) for a single detector (sensor circuit 10). Fig. 7A illustrates the ultrasonic animal repeller 1B as viewed from front and Fig. 7B illustrates the ultrasonic animal repeller 1 B as viewed from a lateral direction. The ultrasonic animal repeller 1 B has a front surface having two ultrasonic output circuits 13a and 13b together with corresponding loudspeaker for a lens of one sensor circuit 10. The ultrasonic animal repeller 1B also includes an indicator lamp 14 that is turned on or blinks when the sensor circuit 10 detects a small animal.

The ultrasonic animal repeller according to the embodiment shown in Figs. 7A and 7B is advantageous in that as shown in Fig. 8, the sensor surveillance area 3 provided for by the ultrasonic animal repeller 1B is of the substantially same size as the ultrasonic wave coverages 2a and 2b and, therefore, the ultrasonic wave can necessarily be generated when a small animal enters the sensor surveillance area 3, thereby enhancing the anti-animal effect.

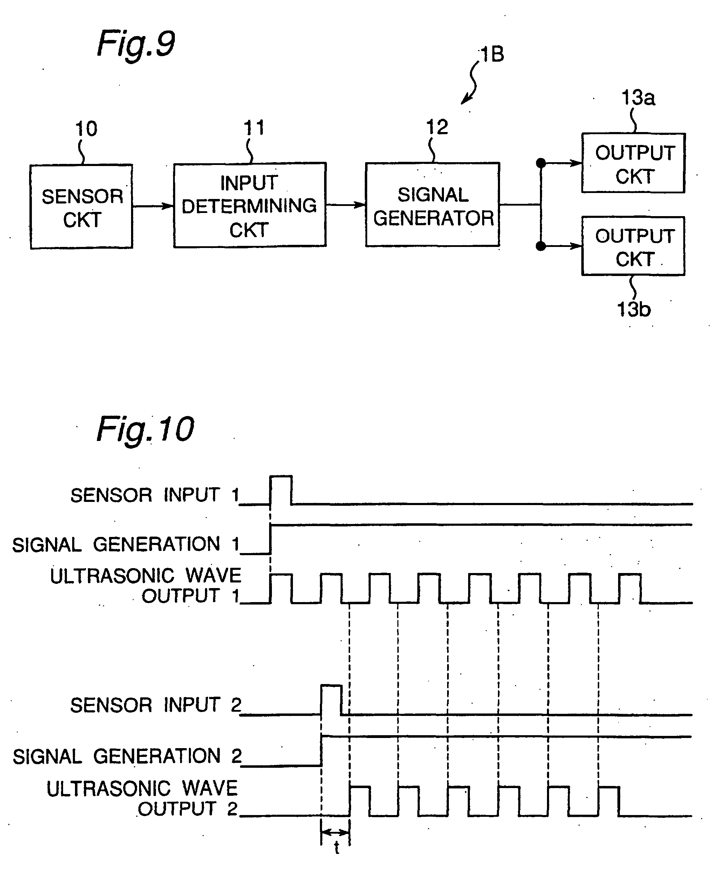

Fig. 9 illustrates a block diagram of the internal electric circuit used in the ultrasonic animal repeller 1B. The internal circuit shown in Fig. 9 differs from that used in any one of the ultrasonic animal repellers 1 and 1A shown respectively in Figs. 2A and 2B and Fig. 6 in that in the ultrasonic animal repeller 1B, only one sensor circuit 10 is employed whereas two ultrasonic output devices 13a and 13b are employed. When the sensor circuit 10 detects a small animal, all of the ultrasonic output devices 13a and 13b output ultrasonic waves.

Although not shown, the use may be made of a plurality of sensor circuits in combination with a plurality of ultrasonic output devices for each of the sensor circuits. In such case, as is the case with the ultrasonic animal repeller 1A shown in Fig. 6, the ultrasonic wave can be outputted from only the plural ultrasonic output devices associated with the sensor circuit then detecting the small animal.

The ultrasonic animal repeller according to a still further embodiment of the present invention will be described. It has been described that the plural ultrasonic output devices 13a to 13d output the ultrasonic waves when in the case of any one of the ultrasonic animal repellers 1 and 1 B one of the sensor circuits 10a to 10d or 10 detects a small animal, or when in the case of the ultrasonic animal repeller 1A the plural sensor circuits 10a to 10d detect a small animal. In any of those cases, the plural ultrasonic output devices 13a to 13d may be so designed as to provide respective ultrasonic waves at different timings displaced relative to each other. If this design in which the ultrasonic waves are outputted at different timings displaced relative to each other is employed, the electric power consumed can advantageously be saved since the current flowing simultaneously can be minimized.

Fig. 10 illustrates an application of the above discussed design to the ultrasonic animal repeller 1A of the structure shown in Fig. 6. Referring to Fig. 10, an ultrasonic wave 1 is outputted in the presence of a sensor input 1, followed by outputting of an ultrasonic wave 2 in the presence of a sensor input 2. However, the timing at which the ultrasonic wave 2 is outputted is delayed a predetermined time t so that the outputting of the ultrasonic wave 1 will not overlap with the outputting of the ultrasonic wave 2.

Although the present invention has been described in connection with the preferred embodiments thereof with reference to the accompanying drawings, it is to be noted that various changes and modifications are apparent to thpse skilled in the art. Such changes and modifications are to be understood as included within the scope of the present invention as defined by the appended claims, unless they depart therefrom.

## Claims

1. An ultrasonic animal repeller (1) for outputting an ultrasonic wave (2a, 2b, 2c, 2d) when an entry of a small animal into a predetermined area is detected, **characterized in that** the repeller (1) comprises a plurality of ultrasonic output units (13a to 13d) all mounted on a repeller body and having respective ultrasonic wave outputting directions that are different from each other, the plurality of ultrasonic output units (13a to 13d) outputting respective ultrasonic waves (2a,2b,2c,2d) so as to propagate radially outwardly from the repeller body.

2. The ultrasonic animal repeller as claimed in Claim 1, **characterized in that** the ultrasonic wave outputting direction from each of the ultrasonic output units (13a to 13d) is variable.

3. The ultrasonic animal repeller as claimed in Claim 1 or 2, **characterized in that** each of the ultrasonic output units (13a to 13d) includes a respective detector (10; 10a to 10d) such that when any one of the detectors detects the presence of a small animal, the ultrasonic waves are generated from one of the ultrasonic output units that is associated with one of the detectors detecting the presence of the small animal.

4. The ultrasonic animal repeller as claimed in any one of Claims 1 to 3, **characterized in that** a single detector (10; 10a to 10d) includes a plurality of ultrasonic output units.

5. The ultrasonic animal repeller as claimed in any one of Claims 1 to 4, **characterized in that** the ultrasonic output units (13a to 13d) generate respective ultrasonic waves at different timings.

## Patentansprüche

1. Ultraschallvorrichtung (1) zum Vertreiben von Tieren, die eine Ultraschallwelle (2a,2b,2c,2d) ausgibt, wenn das Eintreten eines kleinen Tieres in einen vorbestimmten Bereich detektiert wird,
**dadurch gekennzeichnet, dass**
die Vorrichtung (1) zum Vertreiben von Tieren mehrere Ultraschallausgabeeinheiten (13a bis 13d) aufweist, die alle an einem Vorrichtungskörper angebracht sind und jeweils Ultraschallwellen-Ausgaberichtungen aufweisen, die sich voneinander unterscheiden, wobei die mehreren Ultraschallausgabeeinheiten (13a bis 13d) jeweils Ultraschallwellen (2a, 2b,2c,2d) ausgeben, die sich von dem Vorrichtungskörper radial nach außen fortpflanzen.

2. Ultraschallvorrichtung zum Vertreiben von Tieren nach Anspruch 1, **dadurch gekennzeichnet, dass** die Ultraschallwellen-Ausgaberichtungen jeder Ultraschallausgabeeinheit (13a bis 13b) variabel sind.

3. Ultraschallvorrichtung zum Vertreiben von Tieren nach Anspruch 1 oder 2, **dadurch gekennzeichnet, dass** jede Ultraschallausgabeeinheit (13a bis 13d) jeweils einen Detektor (10;10a bis 10d) aufweist, so dass bei Detektierung des Vorhandenseins eines kleinen Tieres durch einen Detektor die Ultraschallwellen von einer Ultraschallausgabeeinheit, die einem das Vorhandensein des kleinen Tieres detektierenden Detektor zugeordnet ist, erzeugt werden.

4. Ultraschallvorrichtung zum Vertreiben von Tieren nach einem der Ansprüche 1 bis 3, **dadurch gekennzeichnet, dass** ein einzelner Detektor (10;10a bis 10d) mehrere Ultraschallausgabeeinheiten aufweist.

5. Ultraschallvorrichtung zum Vertreiben von Tieren nach einem der Ansprüche 1 bis 4, **dadurch gekennzeichnet, dass** die Ultraschallausgabeeinheiten (13a bis 13d) jeweils Ultraschallwellen zu unterschiedlichen Zeitpunkten erzeugen.

## Revendications

1. Appareil répulsif (1) à ultrasons pour animaux, conçu pour émettre une onde ultrasonore (2a, 2b, 2c, 2d) au moment où est détectée une entrée d'un petit animal dans une zone prédéterminée, **caractérisé en ce que** l'appareil répulsif (1) comprend une pluralité de dispositifs (13a à 13d) d'émission d'ultrasons tous montés sur un corps d'appareil répulsif et ayant des directions respectives d'émissions d'ondes ultrasonores qui sont différentes les unes des autres, la pluralité de dispositifs (13a à 13d) d'émission d'ultrasons émettant des ondes ultrasonores respectives (2a, 2b, 2c, 2d) de façon qu'elles se propagent de manière radiale vers l'extérieur depuis le corps de l'appareil répulsif.

2. Appareil répulsif à ultrasons pour animaux selon la revendication 1, **caractérisé en ce que** la direction d'émission d'ondes ultrasonores depuis chacun des dispositifs (13a à 13d) d'émission d'ultrasons est variable.

3. Appareil répulsif à ultrasons pour animaux selon la revendication 1 ou 2, **caractérisé en ce que** chacun des dispositifs (13a à 13d) d'émission d'ultrasons comprend un détecteur respectif (10 ; 10a à 10d) de façon que lorsque l'un quelconque des détecteurs détecte la présence d'un petit animal, les ondes ultrasonores sont produites par l'un des dispositifs d'émission d'ultrasons correspondant à l'un des détecteurs détectant la présence du petit animal.

4. Appareil répulsif à ultrasons pour animaux selon l'une quelconque des revendications 1 à 3, **caractérisé en ce qu'**un seul détecteur (10 ; 10a à 10d) comporte une pluralité de dispositifs d'émission d'ultrasons.

5. Appareil répulsif à ultrasons pour animaux selon l'une quelconque des revendications 1 à 4, **caractérisé en ce que** les dispositifs (13a à 13d) d'émission d'ultrasons produisent des ondes ultrasonores respectives à des instants différents.
